# EUROPÄISCHE PATENTSCHRIFT

(11) **EP 0 571 317 B1**
(45) Veröffentlichungstag und Bekanntmachung des Hinweises auf die Patenterteilung: **03.11.1999**
(21) Anmeldenummer: 93710009.7
(22) Anmeldetag: 18.05.1993
(51) Int. Cl.: C01B 33/143

(54) **Verfahren zur Herstellung bruchfester Sol-Gel-Teilchen**
Preparation of unbreakable sol-gel particles
Préparation de particules "sol-gel" incassables

(30) Priorität: 22.05.1992 DE 4216868
(43) Veröffentlichungstag der Anmeldung: 24.11.1993
(73) Patentinhaber: Solvay Deutschland GmbH, D-30173 Hannover (DE)
(72) Erfinder: Derleth, Helmut, W-3070 Nienburg/Weser (DE); Bretz, Karl Heinz, W-3070 Nienburg/Weser (DE)
(74) Vertreter: Lauer, Dieter, Dr.

(56) Entgegenhaltungen:
- FR-A- 1 473 240
- US-A- 2 885 366
- US-A- 2 900 349
- US-A- 2 964 481
- CHEMICAL ABSTRACTS, vol. 115, no. 12, 23. September 1991, Columbus, Ohio, US; abstract no. 120780u, Seite 410 ;

## Beschreibung

Die vorliegende Erfindung betrifft ein Verfahren zur Herstellung Siliciumdioxid enthaltender Sol-Gel-Teilchen, die Füllstoffe enthalten und eine hohe Bruchfestigkeit aufweisen.

Siliciumdioxid-Teilchen werden im großen Maßstab z.B. als Katalysatoren, Katalysatorträger, Adsorbenzien, Trockenmittel oder Ionenaustauscher verwendet. Für die meisten dieser genannten Anwendungszwecke werden dabei Teilchen benötigt, die eine hohe Bruchfestigkeit aufweisen.

Die Herstellung kugelförmiger Siliciumdioxid-Teilchen erfolgt üblicherweise nach dem an sich bekannten Sol-Gel-Verfahren. Gemäß diesen, z.B. in der FR-PS 1 473 240 beschriebenen Verfahren wird ein Siliciumdioxid-Hydrosol durch Vermischen einer wäßrigen Lösung eines Alkalimetallsilikates mit einer wäßrigen Lösung einer Säure hergestellt. Das erhaltene Hydrosol wird in tropfenförmige Teilchen überführt und die Tropfen anschließend in einer mit Wasser nicht mischbaren Flüssigkeit oder in Luft zur Gelierung gebracht. In einem weiteren Verfahrensschritt wird dann anschließend ein sogenannter Basenaustausch durchgeführt, bei dem der Alkalimetallgehalt der kugelförmigen Siliciumdioxid-Hydrogel-Teilchen in einem wäßrigen Medium auf weniger als 1 Gew.-%, bezogen auf die Trockensubstanz, vermindert wird. Anschließend werden die Teilchen dann noch gewaschen, getrocknet und getempert.

Es ist bekannt, durch das Einbringen einer geringen Füllstoffmenge in die Siliciumdioxid-Teilchen deren Wasserbeständigkeit und Porosität zu beeinflussen. Laut US-A-2 900 349 wird dabei die Abriebfestigkeit der Teilchen erhöht.

Bei einigen Anwendungszwekken kann auch die Gegenwart z.B. eines Aluminiumoxid-Füllstoffes in den Siliciumdioxid-Teilchen erwünscht sein. Außerdem werden durch Zumischen eines billigen Füllstoffes die Herstellkosten der Siliciumdioxid-Teilchen herabgesetzt.

Das Zusetzen eines Füllstoffes bei der Herstellung der Siliciumdioxid-Teilchen erfolgt in an sich bekannter Weise durch Zumischung des Füllstoffes zur wäßrigen Lösung des Alkalimetallsilikates und/oder zur wäßrigen Lösung der Säure, aus denen das Hydrosol durch Vermischen erhalten wird. Bisher wurden beispielsweise Substanzen wie Kaolin, Montmorillonit, Bentonit, Zeolithe, amorphe Alumosilikate, Stärke oder Holzmehl als Füllstoffe eingesetzt.

Die bisher bekannten Verfahren sind mit dem großen Nachteil behaftet, daß durch das Einfällen einer geringen Füllstoffmenge in die Siliciumdioxid-Teilchen deren Bruchfestigkeit stark herabgesetzt wird. Ein hoher Anteil an gebrochenen Sol-Gel-Teilchen während des Herstellvorganges verteuert deren Prozeßkosten. Auch sind Sol-Gel-Teilchen mit mangelnder Bruchfestigkeit kaum noch für die angegebenen Anwendungszwecke geeignet.

Aufgabe der Erfindung war es daher, ein Verfahren zur Verfügung zu stellen, welches die Herstellung bruchfester Siliciumdioxid enthaltender Sol-Gel-Teilchen mit eingefällten Füllstoffen ermöglicht.

Es wurde nun gefunden, daß bruchfeste Siliciumdioxid enthaltende Sol-Gel-Teilchen mit eingefällten Füllstoffen hergestellt werden können, wenn man als Füllstoffe solche mit einer Korngröße von 1-50m einsetzt.

Gegenstand der Erfindung ist daher ein Verfahren zur Herstellung bruchfester, Siliciumdioxid enthaltender Sol-Gel-Teilchen durch Vereinigen einer wäßrigen Lösung eines Alkalimetallsilikates mit einer wäßrigen Lösung einer Säure, Überführen des dabei erhaltenen Hydrosols in einer mit Wasser nicht mischbaren Flüssigkeit oder in Luft in Hydrogel-Teilchen und Behandeln der Hydrogel-Teilchen gemäß den weiteren Behandlungsstufen des Sol-Gel-Verfahrens, dadurch gekennzeichnet, daß man hochdisperse Füllstoffe mit einer korngröße von 1-50m der Lösung des Alkalimetallsilikates und/oder der Lösung der Säure zusetzt.

Als wäßrige Lösung eines Alkalimetallsilikats im Sol-Gel-Verfahren wird üblicherweise Natriumsilikatlösung eingesetzt. Als wäßrige Lösung einer Säure können alle allgemein im Sol-Gel-Verfahren üblichen Säurelösungen, z.B. wäßrige H₂SO₄- oder wäßrige HCl-Lösung eingesetzt werden. Sowohl der Siliciumdioxid-als auch der Säure-Quelle können noch weitere Bestandteile, beispielsweise Aluminium- oder Magnesiumsalze beigefügt sein, so daß im Sinne der Erfindung unter Siliciumdioxid enthaltende Sol-Gel-Teilchen auch Fremdionen enthaltende nach dem Sol-Gel-Verfahren herstellbare Silikate wie z.B. Alumosilikate verstanden werden, wobei je nach Anwendungszweck die Art und Menge der Zusatzkomponenten in weiten Grenzen variieren kann.

Die Überführung des Hydrosols in Hydrogel-Teilchen kann in an sich bekannter Weise nach der Luftfällmethode in Luft oder nach der Öltropfmethode in einer mit Wasser nicht mischbaren Flüssigkeit durchgeführt werden. Als mit Wasser nicht mischbare Flüssigkeiten werden dabei im Sinne der Erfindung im Sol-Gel-Verfahren allgemein gebräuchliche Formöle verstanden, die spezifisch schwerer oder spezifisch leichter als die eingebrachten Teilchen sind. Üblicherweise werden als Formöl z.B. Mineralöl, Rohpetrolium oder Kerosin verwendet.

Gemäß den weiteren an sich bekannten Behandlungsstufen des Sol-Gel-Verfahrens werden die Teilchen aufgearbeitet, indem der Alkalimetallgehalt der erfindungsgemäß hergestellten Hydrogel-Teilchen in einem wäßrigen Medium auf weniger als 1 Gew.-%, bezogen auf die Trockensubstanz, reduziert wird. Anschließend werden die Hydrogel-Teilchen durch Trocknen und Tempern auf an sich bekannte Weise in die erfindungsgemäßen Sol-Gel-Teilchen überführt.

Bevorzugt werden im erfindungsgemäßen Verfahren als hochdisperse Füllstoffe solche eingesetzt, die eine Korngröße von 1 bis 50 nm, insbesondere 1 bis 20 nm, aufweisen.

Als hochdisperse Füllstoffe sind dabei insbesondere hochdisperse anorganische Verbindungen aus der Gruppe Kieselsäuren, Alumosilikate, Aluminiumoxide oder Titandioxid geeignet, soweit sie Korngrößen im Bereich von 1-50nm aufweisen. Derartige hochdisperse Produkte sind allgemein bekannt und kommerziell erhältlich. Bei den genannten hochdispersen Füllstoffen handelt es sich um Substanzen, welche entweder durch Hydrolyse von Verbindungen in der Flamme, im Lichtbogen oder im Plasma oder durch Vermahlen von gefällten über Naßverfahren erhältliche Vorprodukte hergestellt werden. Auch Aerogele, die durch superkritisches Trocknen von Organogelen gewonnen wurden, können eingesetzt werden. Beispiele für derartige in der Flamme, im Lichtbogen oder im Plasma gewonnenen hochdispersen Kieselsäuren sind u.a. die von der Firma Degussa unter dem Namen Aerosil^{R} auf der Basis von Siliciumdioxid erhältlichen Produkte.

Die hochdispersen Füllstoffe werden im erfindungsgemäßen Verfahren in einer Menge von 1 bis 85 Gew.-%, vorzugsweise von 1 bis 60 Gew.-%, bezogen auf den Gesamtfeststoffgehalt der eingesetzten Lösungen, zugesetzt.

Der Zusatz der hochdispersen Füllstoffe kann im erfindungsgemäßen Verfahren entweder zur verwendeten alkalischen SiO₂ enthaltenden Komponente, z.B. wäßriger Natriumsilikatlösung, oder zur verwendeten Säure-Komponente, z.B. wäßriger Schwefelsäurelösung, erfolgen. Das erfindungsgemäße Verfahren kann selbstverständlich auch so durchgeführt werden, daß sowohl die alkalische SiO₂ enthaltende alkalische Komponente als auch die Säure-Komponente die hochdispersen Füllstoffe enthalten.

Sollen hohe Konzentrationen an hochdispersen Füllstoff erreicht werden, so kann die mit dem Feststoff versetzte Komponente zur besseren Vermischung vor der weiteren Verarbeitung in einer an sich bekannten Perlmühle aufgemahlen werden. Liegen die Feststoffkonzentrationen, bezogen auf den Gesamtfeststoffgehalt, über 50 %, wird die Zusammenmischung der alkalischen mit der sauren Komponente zu einem Hydrosol zweckmäßiger in einer an sich bekannten Doppelmischdüse durchgeführt. Bevorzugt setzt man dabei eine Doppelmischdüse mit einem spiralförmigen Inlet ein, um somit eine innigere Vermischung der einzelnen Komponenten zu erreichen. Derartige Doppelmischdüsen sind kommerziell erhältlich.

Neben den hochdispersen Füllstoffen können selbstverständlich auch noch andere nichthochdispersive Füllstoffe, beispielsweise Kaolin, Montmorillonit, Bentonit, Fällungskieselsäuren, Aluminiumoxide, Zeolithe oder amorphe Alumosilikate im erfindungsgemäßen Verfahren eingesetzt werden. Auch an sich bekannte Porosierungsmittel wie z.B. Stärke oder Holzmehl können beigefügt werden. Der Anteil der hochdispersiven Füllstoffe an der Gesamtmenge des eingesetzten Füllstoffes sollte dabei 1 bis 85 Gew.-%, bevorzugt 25 bis 80 Gew.-%, bezogen auf den Gesamtfüllstoffgehalt, betragen.

Bevorzugt wird das Verfahren so durchgeführt, daß man kugelförmige Sol-Gel-Teilchen erhält. Dies kann erreicht werden, indem man das aus dem Zusammenfügen der wäßrigen Lösung des Alkalimetallsilikates zur wäßrigen Lösung der Säure erhaltene Hydrosol in tropfenförmige Hydrosol-Teilchen überführt, die dann nach der Luftfällmethode beim Fallen durch 30 m Luftsäule zu kugelförmigen Teilchen gelieren. Die Öltropfmethode wird beispielsweise so durchgeführt, daß man die Ausgangslösungen über eine Mischdüse, bei hohen Feststoffkonzentrationen gegebenenfalls über eine Doppelmischdüse, vereinigt und aus dieser Mischdüse heraus in dünnem Strahl über einen Fällkonus in ein Formöl einbringt. Die Einhaltung bestimmter an sich bekannter Konzentrationsgrenzen erlaubt es, ein Gemisch zu erhalten, das erst dann koaguliert, wenn der in das Formöl eingebrachte Flüssigkeitsstrahl in separate Tropfen zerfallen ist.

Ein Vorteil des erfindungsgemäßen Verfahrens ist die Herstellung wassersbeständiger und poröser Sol-Gel-Teilchen mit eingefällten Füllstoffen, die eine überraschend hohe Bruchfestigkeit aufweisen. Daß der Einsatz hochdisperser Füllstoffe im erfindungsgemäßen Verfahren zu einer Verbesserung der Bruchfestigkeit der hergestellten Teilchen führt, ist überraschend und konnte nicht erwartet werden.

Im Sinne der Erfindung wird unter hoher Bruchfestigkeit für einzelne nach dem erfindungsgemäßen Verfahren hergestellte kugelförmige Sol-Gel-Teilchen eine Einzelbruchfestigkeit von mindestens
2 kg bei einem Kugeldurchmesser von 1 bis 2 mm,
4 kg bei einem Kugeldurchmesser von 2 bis 3 mm,
8 kg bei einem Kugeldurchmesser von 3 bis 4 mm,
9 kg bei einem Kugeldurchmesser von 4 bis 5 mm und
10 kg bei einem Kugeldurchmesser von 5 bis 6 mm
   verstanden (gemessen mit dem Berstdruckmeßgerät der Firma Zwick). Durch den Einbau hochdisperser Füllstoffe wird somit der Berstdruck der Sol-Gel-Teilchen in vorteilhafter Weise erhöht.

Ein weiterer Vorteil der nach dem erfindungsgemäßen Verfahren hergestellten Sol-Gel-Teilchen ist neben der hervorragenden Bruchfestigkeit deren hohe Wasserbeständigkeit. Dabei werden im Sinne der Erfindung unter Teilchen mit verbesserter Wasserbeständigkeit solche Sol-Gel-Teilchen verstanden, die eine Wasserbeständigkeit von mindestens 70 % aufweisen. Die Wasserbeständigkeit der nach dem erfindungsgemäßen Verfahren hergestellten kugelförmigen Sol-Gel-Teilchen wird dabei nach einem Standard-Prüfungsverfahren bestimmt, bei dem 100 kugelförmige Sol-Gel-Teilchen auf einer unter einem Winkel von 45 ° mit 20 Umdrehungen pro Minute rotierende Becher vom 25 cm Durchmesser innerhalb von 10 Sekunden bei Raumtemperatur mit dem 5-fachen Wasservolumen des Volumens der 100 kugelförmigen Sol-Gel-Teilchen kontinuierlich besprüht werden. Anschließend werden die Teilchen getrocknet und die Menge der Teilchen bestimmt, die Sprünge aufweisen oder zerfallen sind. Die Wasserbeständigkeit der kugelförmigen Sol-Gel-Teilchen wird als Gewichtsprozentsatz der Teilchen ausgedrückt, die beim Kontaktieren mit Wasser nicht beschädigt worden sind.

Die erfindungsgemäß hergestellten Sol-Gel-Teilchen mit eingefällten hochdispersen Füllstoffen können z.B. als Katalysatoren, Katalysatorträger, Adsorptionsmittel, Trockenmittel oder Ionenaustauscher verwendet werden. Insbesondere eignen sie sich als Trägermaterialien für ein oder mehrere katalytisch aktive Metalle enthaltende Katalysatoren, wie sie beispielsweise in chemischen oder petrochemischen Verfahren eingesetzt werden.

### Beispiele

### Beispiel 1 - 6:

Herstellung bruchfester Sol-Gel-Teilchen mit eingefällten Füllstoffen.

### Beispiel 1:

Es wurden jeweils separat eine saure Lösung und eine alkalische Silikatlösung mit den in Tabelle 1 angegebenen Konzentrationen hergestellt und zur Bildung der Einsatzkomponenten mit den ebenfalls in Tabelle 1 angegebenen Maischen versetzt.

**Tabelle 1**

| Zusammensetzung der Einsatzlösungen und Einsatzkomponenten gemäß Beispiel 1 | | |
|---|---|---|
| Saure Lösung SL: | H₂SO₄: | 15,20 Gew.-% |
| | H₂O: | 84,80 Gew.-% |
| | d₂₀: | 1,106 g/ml |
| Aerosil-Maische | AM: | Aerosil^{R}200:10,00 Gew.-% |
| | H₂O: | 90,00 Gew.-% |
| | d₂₀: | 1,055 g/ml |
| ϕ=V_{AM}:V_{SL}= 1,78 | | |
| Saure Komponente SK: | H₂SO₄: | 5,63 Gew.-% |
| | Aerosil | ^{R}200:6,30 Gew.-% |
| | H₂O: | 88,07 Gew.-% |
| | d₂₀: | 1,071 g/ml |
| Alkalische Lösung | AL: | Na₂O:5,88 Gew.-% |
| | SiO₂: | 19,11 Gew.-% |
| | H₂O: | 75,01 Gew.-% |
| | d₂₀: | 1,235 g/ml |
| SiO₂-Maische MJ: (SiO₂-Perlen in der Jetmühle homogenisiert Cilas d₅₀= 3,8 Micron) | SiO₂: | 21,40 Gew.-% |
| | H₂O: | 78,60 Gew.-% |
| | d₂₀: | 1,138 g/ml |
| ϕ' = V _{MJ}:V_{AL}= 0,395 | | |
| Alkalische Komponente | AK: | Na₂O:4,31 Gew.-% (SiO₂-Maische) |
| | SiO₂: | 5,71 Gew.-% |
| | | 14,01 Gew.-% (Wasserglas) |
| | H₂O: | 75,97 Gew.-% |
| | d₂₀: | 1,209 g/ml |
| d₂₀: Dichte bei 20 °C ϕ bzw. ϕ': Volumenverhältnis | | |

Als hochdisperser Füllstoff wurde eine hochdisperse Kieselsäure (Aerosil^{R}200; Korngröße ca. 12 nm) eingesetzt.

Über eine nach dem Sol-Gel-Verfahren an sich bekannte Mischdüse wurden die Saure Komponente SK und die Alkalische Komponente AK bei Temperaturen zwischen 9 und 11 °C gemischt und sofort in dünnem Strahl in ein Formöl (Mineralöl) eingebracht. Die resultierenden Gemische koagulierten im Formöl in Tröpfchenform. Die Teilchen sanken aufgrund des geringeren spezifischen Gewichts des Formöls in das darunter befindliche Schleusenwasser und wurden durch dieses ausgetragen. Gemäß den an sich bekannten Verfahrensstufen des Sol-Gel-Verfahrens erfolgte dann eine Aufarbeitung durch einen Alterungsprozeß im Schleusenwasser sowie ein Basenaustausch zur Erniedrigung des Alkalimetallgehaltes der Teilchen. Die näheren Bedingungen der einzelnen Verfahrensschritte Altern im Schleusenwasser, Basenaustausch und Waschen sind in Tabelle 2 angegeben. Die Verfahrensprodukte wurden anschließend einheitlich bei 180 °C 5 Stunden lang getrocknet sowie 2 Stunden lang bei 400 °C getempert. Es resultierten Perlen von 3,5 bis 5 mm Durchmesser, deren Rüttelgewicht, Oberfläche, Porenvolumen und Berstdruck in Tabelle 3 angegeben sind.

**Tabelle 2**

| Aufarbeitung der Koagulate gemäß Beispiel 1 | |
|---|---|
| Fällung: | 6,9 pH |
| Schleusenwasser: | 11 °C |
| Umlaufzeit: | 6 h |
| Alterung: | 8 h (von Fällungsbeginn bis zum Ende der Alterung) |
| | 16 °C |
| Basenaustauschlösung:jeweils | 0,5 %-ige (NH₄)₂SO₄-Lösung |
| Basenaustausch kalt: | 10 h |
| | 16 °C |
| Basenaustausch warm: | 12 h |
| | 25 °C |
| Waschen (bis zur Sulfat-freiheit) : | 30 h |
| | 25 h |

**Tabelle 3**

| Eigenschaften der Verfahrensprodukte gemäß Beispiel 1 | |
|---|---|
| Korngröße: | 3,5 - 5,5 mm |
| Schüttgewicht getrocknet: | 0,42 g/ml |
| Schüttgewicht getempert: | 0,41 g/ml |
| Berstdruck***: | 14 kg |
| Porenvolumen**: | 1,01 ml/g |
| spezifische Oberfläche*: | 334 m²/g |

| | |
|---|---|
| * gemessen nach Haul/Dümbgen | |
| ** berechnet aus wahrer und scheinbarer Dichte | |
| *** gemessen mit dem Berstdruckgerät der Fa. Zwick, Mittelwert aus 25 Messungen | |

### Beispiel 2 - 6:

In den Beispielen 2 bis 6 wurden die Einsatzlösungen und einsatzkomponenten mit den in Tabelle 4 angegebenen Zusammensetzungen eingesetzt. Aufgrund des höheren Gehaltes an hochdispersen Füllstoff in der sauren Komponente SK wurde diese mit der Aerosil-Maische AM in einer Perlmühle (Drais PM50) bei 9 °C homogenisiert. Anschließend wurde die saure Komponente SK mit der alkalischen Lösung AL bei 9 °C in einer an sich bekannten Doppelmischdüse mit spiralförmigen Inlet (Hersteller: Bete Fog Nozzle Inc., Greenfield USA) miteinander vermischt. Die übrigen Verfahrenschritte wurden wie bereits in Beispiel 1 beschrieben durchgeführt. In Tabelle 4 ist weiterhin die Menge an hochdispersen Füllstoff, bezogen auf den Gesamtfeststoffgehalt, angegeben.

Die Verfahrensprodukte wurden einheitlich bei 180 °C für 4 Stunden getrocknet und anschließend für 4 h bei 600 °C getempert.

Die einzelnen Aufarbeitungsschritte sind in Tabelle 5 angegeben. In Tabelle 6 sind die Eigenschaften der erhaltenen Verfahrensprodukte dargestellt.

**Tabelle 4**

| Zusammensetzung der Einsatzlösungen und Einsatzkomponenten gemäß der Beispiele 2 bis 6 | | | | | | | |
|---|---|---|---|---|---|---|---|
| Beispiel: | | | 2 | 3 | 4 | 5 | 6 |
| saure Lösung SL | H₂SO₄ | Gew.-% | 27,00 | 27,00 | 96,00 | 96,00 | 96,00 |
| | H₂O | Gew.-% | 73,00 | 73,00 | 4,00 | 4,00 | 4,00 |
| | d₂₀ | g/ml | 1,197 | 1,197 | 1,841 | 1,841 | 1,841 |
| Aerosil-Maische AM | Aerosil^{R}200 | Gew.-% | 10,00 | 10,00 | 10,00 | 10,00 | 15,00 |
| | H₂O | Gew.-% | 90,00 | 90,00 | 90,00 | 90,00 | 85,00 |
| | d₂₀ | g/ml | 1,054 | 1,054 | 1,054 | 1,054 | 1,081 |
| f = V_{AM} : V_{SL} | | | 6,452 | 6,452 | 53,452 | 83,018 | 94,515 |
| saure Komponente SK | H₂SO₄ | Gew.-% | 4,04 | 4,04 | 3,04 | 1,98 | 1,70 |
| | Aerosil^{R}200 | Gew.-% | 8,50 | 8,50 | 9,68 | 9,79 | 14,73 |
| | H₂O | Gew.-% | 87,46 | 87,46 | 87,28 | 88,23 | 83,57 |
| | d₂₀ | g/ml | 1,073 | 1,073 | 1,069 | 1,063 | 1,089 |
| Alkalische Lösung AL | | Na₂O | Gew.-% | 5,00 | 5,00 | 4,80 | 4,806,00 |
| | SiO₂ | Gew.-% | 16,80 | 16,80 | 16,10 | 16,10 | 20,16 |
| | H₂O | Gew.-% | 78,20 | 78,20 | 79,10 | 79,10 | 73,84 |
| | d₂₀ | g/ml | 1,185 | 1,185 | 1,171 | 1,171 | 1,255 |
| F = V_{SK} | : V_{AL} | | | | 2,182 | 2,182 | 2,7344,2246,308 |
| Anteil Aerosil | SiO₂ | Gew.-% | 50 | 50 | 60 | 70 | 80 |
| Anteil SiO₂ aus Wasserglas | SiO₂ | Gew.-% | 50 | 50 | 40 | 30 | 20 |

**Tabelle 5**

| Aufarbeitung der Koagulate gemäß der Beispiel 2 bis 6 | | | | | | |
|---|---|---|---|---|---|---|
| Beispiel: | | 2 | 3 | 4 | 5 | 6 |
| Fällung | pH | 9,5 | 9,0 | 8,6 | 8,6 | 8,8 |
| Schleusenwasser | °C | 11,0 | 11,0 | 11,0 | 11,0 | 11,0 |
| Umlaufzeit | h | 6,0 | 6,0 | 6,0 | 6,0 | 6,0 |
| Alterung | °C | 16,0 | 16,0 | 16,0 | 16,0 | 16,0 |
| | h | 12,0 | 4,0 | 4,0 | 4,0 | 4,0 |
| Konzentration der Basenaustauschlösung (NH₄)₂SO₄ | %ig | 0,5 | 0,5 | 0,5 | 0,5 | 0,5 |
| Basenaustausch kalt | h | 10,0 | 10,0 | 10,0 | 10,0 | 10,0 |
| | °C | 16,0 | 16,0 | 16,0 | 16,0 | 16,0 |
| Basenaustausch warm | h | 16,0 | 16,0 | 16,0 | 16,0 | 16,0 |
| | °C | 25,0 | 25,0 | 25,0 | 25,0 | 25,0 |
| Waschen | h | 25,0 | 25,0 | 18,0 | 13,0 | 12,0 |
| (bis zur Sulfatfreiheit) | °C | 25,0 | 25,0 | 25,0 | 25,0 | 25,0 |

**Tabelle 6**

| Eigenschaften der Verfahrensprodukte gemäß der Beispiele 2 bis 6 | | | | | | |
|---|---|---|---|---|---|---|
| Beispiel: | | 2 | 3 | 4 | 5 | 6 |
| Korngröße | mm | 3,5 - 5,5 | 3,5 - 5,5 | 3,5 - 5,5 | 5,0 | 5,0 |
| Schüttgewicht getrocknet | g/ml | 0,50 | 0,46 | 0,45 | 0,40 | 0,38 |
| Schüttgewicht getempert | g/ml | 0,55 | 0,50 | 0,49 | 0,46 | 0,42 |
| Berstdruck *** | | | kg | >20,0 | 15,5 | 16,017,210,8 |
| Porenvolumen ** | ml/g | 0,69 | 0,78 | 0,80 | 0,80 | 0,98 |
| spezifische Oberfläche * | m²/g | 494 | 183 | 272 | 260 | 247 |
| mittlerer Porendurchmesser | Å | 56 | 171 | 118 | 123 | 159 |

| | | | | | | |
|---|---|---|---|---|---|---|
| * gemessen nach Haul/Dümbgen | | | | | | |
| ** berechnet aus wahrer und scheinbarer Dichte | | | | | | |
| *** gemessen mit dem Berstdruckgerät der Fa. Zwick, Mittelwert aus 25 Messungen | | | | | | |

### Beispiel 7:

Weiterverarbeitung der erfindungsgemäßen Sol-Gel-Teilchen zu einem Katalysator für die Hydratation von Olefin zu Alkohol

Für die Herstellung eines Katalysators zur Hydratation von Olefinen zu Alkoholen wurden die nach Beispiel 1 hergestellten Sol-Gel-Teilchen als Katalysatorträgersubstanzen eingesetzt. Hierfür wurden 500 ml der erfindungsgemäß hergestellten Sol-Gel-Teilchen in einer Menge von 500 ml in eine Lösung, bestehend aus 30 Gew.-% H₃PO₄, 7,5 Gew.-% H₂O und 52,5 Gew.-% Ethanol, getaucht und 2 Stunden stehengelassen. Anschließend ließ man die Teilchen abtropfen und 12 Stunden bei etwa 180 °C trocknen. 94,8 % der Teilchen lagen als ganze Perlen mit einem Berstdruck von 12,9 kg vor.

## Patentansprüche

1. Verfahren zur Herstellung bruchfester Siliciumdioxid enthaltender Sol-Gel-Teilchen durch Vereinigen einer wäßrigen Lösung eines Alkalimetallsilikates mit einer wäßrigen Lösung einer Säure, Überführen des dabei erhaltenen Hydrosols in einer mit Wasser nicht mischbaren Flüssigkeit oder in Luft in Hydrogel-Teilchen und Behandeln der Hydrogel-Teilchen gemäß den weiteren Behandlungsstufen des Sol-Gel-Verfahrens, dadurch gekennzeichnet, daß man hochdisperse Füllstoffe mit einer Korngröße von 1 bis 50 nm der Lösung des Alkalimetallsilikates und/oder der Lösung der Säure zusetzt.

2. Verfahren nach Anspruch 1, dadurch gekennzeichnet, daß hochdisperse Füllstoffe mit einer Korngröße von , 1 bis 20 nm, zugesetzt werden.

3. Verfahren nach einem der vorherigen Ansprüche, dadurch gekennzeichnet, daß man als hochdisperse Füllstoffe hochdisperse anorganische Verbindungen aus der Gruppe Kieselsäuren, Alumosilikate, Aluminiumoxide und Titandioxid einsetzt.

4. Verfahren nach einem der vorherigen Ansprüche, dadurch gekennzeichnet, daß man als hochdisperse Füllstoffe hochdisperse Kieselsäuren einsetzt.

5. Verfahren nach einem der vorherigen Ansprüche, dadurch gekennzeichnet, daß die Matrix der erhaltenen Sol-Gel-Teilchen Siliciumdioxid ist.

6. Verfahren nach einem der vorherigen Ansprüche, dadurch gekennzeichnet, daß man die hochdispersen Füllstoffe in einer Menge von 1 bis 85 Gew.-%, bezogen auf den Gesamtfeststoffgehalt, zusetzt.

7. Verfahren nach Anspruch 6, dadurch gekennzeichnet, daß man die Füllstoffe in einer Menge von 25 bis 80 Gew.-%, bezogen auf den Gesamtfeststoffgehalt, zusetzt.

8. Verfahren nach einem der vorherigen Ansprüche, dadurch gekennzeichnet, daß man die Sol-Gel-Teilchen als kugelförmige Teilchen erhält.

9. Verwendung der nach einem der vorherigen Ansprüche hergestellten Sol-Gel-Teilchen als Katalysatoren oder Katalysatorträger.

10. Verwendung der noch einem der vorherigen Ansprüche hergestellten Sol-Gel-Teilchen als Ionenaustauscher, Adsorptions- oder Trockenmittel.

11. Siliciumdioxid enthaltene Sol-Gel-Teilchen, dadurch gekennzeichnet, daß sie einen hochdispersen Füllstoff mit einer Korngröße von 1 bis 50 nm in einer Menge von 1 bis 85 Gew.-%, bezogen auf den Gesamtfeststoffgehalt, enthalten.

## Claims

1. Process for the preparation of breaking-resistant sol/gel particles containing silicon dioxide by combining an aqueous solution of an alkali metal silicate with an aqueous solution of an acid, converting the resulting hydrosol into hydrogel particles in a water-immiscible liquid or in air and treating the hydrogel particles in accordance with the subsequent treatment stages of the sol/gel process, characterised in that highly disperse fillers having a particle size of 1 to 50 nm are added to the solution of the alkali metal silicate and/or to the solution of the acid.

2. Process according to Claim 1, characterised in that highly disperse fillers having a particle size of 1 to 20 nm are added.

3. Process according to one of the preceding claims, characterised in that highly disperse inorganic compounds from the group comprising silicic acids, alumosilicates, aluminium oxides and titanium dioxide are employed as the highly disperse fillers.

4. Process according to one of the preceding claims, characterised in that highly disperse silicic acids are employed as the highly disperse fillers.

5. Process according to one of the preceding claims, characterised in that the matrix of the resulting sol/gel particles is silicon dioxide.

6. Process according to one of the preceding claims, characterised in that the highly disperse fillers are added in an amount of 1 to 85 % by weight, based on the total solids content.

7. Process according to Claim 6, characterised in that the fillers are added in an amount of 25 to 80 % by weight, based on the total solids content.

8. Process according to one of the preceding claims, characterised in that the sol/gel particles are obtained as spherical particles.

9. Use of the sol/gel particles prepared according to one of the preceding claims 1 to 8 as catalysts or catalyst supports.

10. Use of the sol/gel particles prepared according to one of the preceding claims 1 to 8 as ion exchangers, adsorption agents or drying agents.

11. Sol/gel particles containing silicon dioxide, characterised in that they contain a highly disperse filler having a particle size of 1 to 5 nm in an amount of 1 to 85 % by weight, based on the total solids content.

## Revendications

1. Procédé de préparation de particules sol-gel résistantes à la rupture contenant du dioxyde de silicium, par réunion d'une solution aqueuse d'un silicate de métal alcalin avec me solution aqueuse d'un acide, transformation de l'hydrosol ainsi obtenu en un liquide non miscible à l'eau ou dans l'an en particules d'hydrogel et traitement des particules d'hydrogel selon les autres étapes de traitement du procédé sol-gel, caractérisé en ce qu'on ajoute me charge hautement dispersée, ayant une granulométrie de 1 à 50 nm, à la solution du silicate de métal alcalin et/ou à la solution de l'acide.

2. Procédé selon la revendication 1, caractérisé en ce qu'on ajoute une charge hautement dispersée ayant une granulométrie de 1 à 20 nm.

3. Procédé selon l'une des revendications précédentes, caractérisé en ce qu'on utilise comme charge hautement dispersée, des composés inorganiques hautement dispersés du groupe comprenant les acides siliciques, les aluminosilicates, les oxydes d'aluminium et le dioxyde de titane.

4. Procédé selon l'une des revendications précédentes, caractérisé en ce qu'on utilise comme charge hautement dispersée des acides siliciques hautement dispersés.

5. Procédé selon l'une des revendications précédentes, caractérisé en ce que la matrice des particules sol-gel obtenues est du oxyde de silicium.

6. Procédé selon l'une des revendications précédentes, caractérisé en ce qu'on ajoute les charges hautement dispersées en une quantité de 1 à 85 % en poids, rapportés à la teneur totale en solides.

7. Procédé selon la revendication 6, caractérisé en ce qu'on ajoute la charge en une quantité de 25 à 80 % en poids, rapportés à la teneur totale en solides.

8. Procédé selon l'une des revendications précédentes, caractérisé en ce que l'on obtient les particules sol-gel sous la forme de particules sphériques.

9. Utilisation des particules sol-gel préparées selon l'une des revendications précédentes comme catalyseurs ou supports de catalyseurs.

10. Utilisation des particules sol-gel préparées selon l'une des revendications précédentes comme échangeurs d'ions, agents adsorbants ou agents desséchants.

11. Particules sol-gel contenant du dioxyde de silicium, caractérisées en ce qu'elles contiennent une charge hautement dispersée ayant une granulométrie de 1 à 5 nm, en une quantité de 1 à 85 % en poids, rapportés à la teneur totale en solides.
